Europäisches Patentamt

(19) European Patent Office

Office européen des brevets

(11) Veröffentlichungsnummer: **0 250 815 B1**

(12) **EUROPÄISCHE PATENTSCHRIFT**

(45) Veröffentlichungstag der Patentschrift:
28.08.91 Patentblatt 91/35

(51) Int. Cl.⁵: **A01K 1/035,** B65D 79/00,
B65D 75/58

(21) Anmeldenummer: 87107096.7

(22) Anmeldetag: 15.05.87

(54) Trockentoilette für Haustiere, insbesondere Katzen.

(30) Priorität: 04.07.86 DE 3622528

(43) Veröffentlichungstag der Anmeldung:
07.01.88 Patentblatt 88/01

(45) Bekanntmachung des Hinweises auf die
Patenterteilung:
28.08.91 Patentblatt 91/35

(84) Benannte Vertragsstaaten:
AT BE CH DE ES FR GB GR IT LI NL SE

(56) Entgegenhaltungen:
EP-A- 0 195 221
DE-A- 2 754 620
FR-A- 2 548 137

(73) Patentinhaber: Effem GmbH
Eitzer Landstrasse
W-2810 Verden/Aller (DE)

(72) Erfinder: Kiel, Hans-Richard
Elbinger Strasse 66
W-2806 Oyten (DE)

(74) Vertreter: Goddar, Heinz J., Dr. et al
FORRESTER & BOEHMERT
Widenmayerstrasse 4/I
W-8000 München 22 (DE)

**Beschreibung**

Die Erfindung betrifft eine Trockentoilette für Haustiere, insbesondere Katzen, nach dem Oberbegriff des Anspruchs 1.

Bei einer bekannten Trockentoilette dieser Art ist die Weichverpackung von einem wannenförmigen Grundkörper aus Kunststoffolie oder wasser- und reißfestem Papier mit aufbiegsamen Randzonen gebildet, der oberseitig mit einem entlang Perforationslinien aufreißbaren Packpapierdeckel versehen ist. Der Grundkörper ist dabei randseitig mit dem Packpapierdeckel verbunden und bildet auf diese Weise eine beutelartige Verpackung mit einem die Hygienestreufüllung aus saugfähigem Material enthaltenden allseits geschlossenen Aufnahmeraum. Zum Gebrauch der Verpackung als Trockentoilette wird der Packpapierdeckel entlang den umlaufend angeordneten Perforationslinien nach Art des Deckels einer Fischdose vom Grundkörper abgetrennt, um den Aufnahmeraum für die Tierexkremente oberseitig freizulegen. In diesem Gebrauchszustand bildet der Packpapierdeckel nicht länger einen Bestandteil der Trockentoilette.

Bei dieser bekannten Trockentoilette bieten die im Versand- bzw. Lagerungszustand der Trockentoilette nach der Rückseite des wannenförmigen Grundkörpers hin umgeschlagenen und zum Gebrauch der Trockentoilette nach oben umzubiegenden Randzonen wegen ihres geringen Überstands über die oberseitige Öffnung des Füllraums nur einen geringen Schutz der Umgebung vor Verunreinigungen, die von den Tieren beim Abgeben ihrer Exkremente auftreten können. Auch ermöglichen es diese kurzen Randzonen nicht, die Trockentoilette als Einsatz für ein festes, behälterartiges Toilettenunterteil zu verwenden und dabei die Randzonen zur Festlegung des Einsatzes im Unterteil durch Umlegen über dessen Behälterrand und Sicherung durch ein auf den Behälterrand des Unterteils aufgesetztes Oberteil zu benutzen. Schließlich handelt es sich bei der bekannten Trockentoilette zwar ebenfalls um einen Einweg- bzw. Wegwerfartikel, jedoch sind in diesem Zusammenhang in dem bekannten Fall keine Vorkehrungen getroffen, die ohne weiteres einen erneuten Verschluß des Aufnahmeraums nach Gebrauch der Toilette bzw. bei Verschmutzung des Aufnahmeraums und Erschöpfung der Hygienestreufüllung ermöglichen.

Aus der FR-A-2548137 ist es zusätzlich bekannt eine derartige Trockentoilette für Haustiere aus einem entsprechenden entlang seinen Seitenrändern flachgelegten Schlauchabschnitt zu bilden, bei dem zur Freilegung des Aufnahmeraums die Vorderwand des Schlauchabschnitts um von dessen Seitenrändern gebildete Schwenkachsen hälftig aufklappbar ist. Die oben beschriebenen Nachteile werden aber auch bei dieser Trockentoilette nicht in zufriedenstellender Weise vermieden.

Im Hinblick auf die Neuheit bezüglich der Benennungsstaaten AT, BE, CH, DE, FR, IT, LI, NL, SE und GB ist noch die eigene ältere Anmeldung EP-A-195221 nach Artikel 54(3) relevant. Diese Dokument beschreibt eine Trockentoilette für Haustiere, insbesondere Katzen, bestehend aus einer Einweg-Weichverpackung aus flexiblem Material mit einem eine Hygienestreufüllung enthaltenden, allseits geschlossenen Aufnahmeraum, der zum Gebrauch der Verpackung unter Auftrennen einer gesonderten Flachmateriallage oberseitig freilegbar ist, wobei die Weichverpackung von einem entlang seinen Seitenrändern flachgelegten, ausgehend von einer Flachbahn durch eine schlauchbildende Längsnaht geschlossenen Schlauchabschnittt gebildet ist und die gesonderte Flachmateriallage aus einer im Inneren des Schlauchabschnitts angeordneten, in ihrer Länge der des Schlauchabschnitts entsprechenden Zwischenlage besteht; von den einander gegenüberligenden Breitseiten des Aufnahmeraums die äußere von der Rückwand des Schlauchabschintts und die innere von einer von der Zwischenlage gebildeten Begrenzungswand eingenommen ist; und zur Freilegung des Aufnahmeraums die an die Zwischenlage angrenzende Vorderwand des Schlauchabschnitts um von dessen Seitenrändern gebildete Schwenkachsen und die Zwischenlage quer dazu jeweils in entgegengesetzten Richtungen hälftig aufklappbar sind.

Der Erfindung liegt die Aufgabe zugrunde, eine Trockentoilette für Haustiere, insbesondere Katzen, der eingangs angegebenen Art zu schaffen, die sowohl als freitragendes Behältnis verwendet werden kann und dabei die unmittelbare Umgebung vor Verunreinigungen durch Tierexkremente schützt, als auch als Einsatz für einen starren Behälter dienen kann und dabei eine randseitige Festlegung am Behälterrand mittels eines Klemmrings od. dgl. ermöglicht und bei der in allen Fällen der Aufnahmeraum nach Gebrauch der Toilette jederzeit ohne weiteres wieder verschließbar ist.

Diese Aufgabe wird nach der Erfindung durch eine Ausgestaltung der Trockentoilette gemäß dem Anspruch 1 gelöst. Dadurch, daß bei dieser Ausgestaltung die Weichverpackung von einem Schlauchabschnitt gebildet ist und die innere Zwischenlage in ihrer Länge der des Schlauchabschnitts und in ihrer Breite der der Ausgangsflachbahn des Schlauchabschnitts entspricht, werden bei der Freilegung des Aufnahmeraums zur Ingebrauchnahme der Trockentoilette durch das jeweils hälftige Aufklappen der Schlauchvorderwand und der Zwischenlage in entgegengesetzten Richtungen im wesentlichen gleichgroße äußere Überstände an allen vier Seiten des Aufnahmeraums gebildet, die sich zu einer ununterbrochenen, umlaufenden Schürze vervollständigen. Diese Randschürze besitzt eine solche, aus den gewählten Abmessungen des die Verpackung bildenden Schlauchabschnitts resultierende, quer zum Rand des Aufnahmeraums gemessene Breite, daß bei der Verwendung der Trockentoilette als freitragendes Aufnahmebehältnis ein wirksamer Schutz der unmittelbaren Umgebung des Aufnahmeraums vor Verunreinigungen durch Tierexkremente gewährleistet ist. Zugleich ermöglicht es diese breite umlaufende Schürze auch, die erfindungsgemäße Trockentoilette als Einsatz in einem oben offenen, festen Behälter z.B. rechteckiger Grund-form zu verwenden und durch Umstülpen der Schürze um den Behälterrand im Behälter durch einen aufsetzbaren oberen Klemmring oder in sonst geeigneter Weise zu sichern. Da überdies die die umlaufende Schürze bildenden, auseinandergeklappten Teile des Schlauchabschnitts einerseits und der Zwischenlage andererseits in Gebrauchslage der Trockentoilette mit dieser verbunden bleiben, ist es auch ohne weiteres möglich, den Aufnahmeraum nach Gebrauch der Toilette bzw. bei Verschmutzung durch Tierexkremente und Erschöpfung der Hygienestreufüllung zum Wegwerfen der Toilettenpackung durch Zurückfalten der Schürzenteile wieder zu verschließen. Auf diese Weise ist eine hygienische Abfallbeseitigung erreicht.

Zahlreiche weitere Merkmale und Vorteile der Erfindung ergeben sich aus den Unteransprüchen und der nachstehenden Beschreibung in Verbindung mit der Zeichnung,

in der mehrere Ausführungsbeispiele des Gegenstands der Erfindung schematisch veranschaulicht sind. In der Zeichnung zeigen:

Fig. 1 eine Vorderansicht einer Trockentoilette für Haustiere, insbesondere Katzen, in Form einer Einweg-Weichverpackung,

Fig. 2 einen Querschnitt durch die Verpackung nach Fig. 1,

Fig. 3 eine Darstellung entsprechend Fig. 2 zur Veranschaulichung einer abgewandelten Ausführungsform,

Fig. 4 eine Vorderansicht der Verpackung nach Fig. 1 in einem teilweise geöffneten Zustand,

Fig. 5 einen Querschnitt durch die Verpackung nach Fig. 4,

Fig. 6 eine Darstellung entsprechend Fig. 5 unter Zugrundelegung der abgewandelten Ausführungsform nach Fig. 3,

Fig. 7 eine Vorderansicht eines weiteren Ausführungsbeispiels einer Trockentoilette in Form einer Einweg-Weichverpackung,

Fig. 8 einen Querschnitt durch die Verpackung nach Fig. 7,

Fig. 9 eine Darstellung entsprechend Fig. 8 zur Veranschaulichung einer Variante,

Fig. 10 eine Vorderansicht der Verpackung nach Fig. 7 in einem teilweise geöffneten Zustand,

Fig. 11 einen Querschnitt durch die Verpackung nach Fig. 10,

Fig. 12 einen Querschnitt entsprechend Fig. 11 unter Zugrundelegung der Variante nach Fig. 9 und

Fig 13-15 eine weitere Abwandlung in Darstellungen entsprechend den Figuren 7 bis 9.

Die in der Zeichnung dargestellte Trockentoilette für Haustiere, insbesondere Katzen, ist von einer Einweg-Weichverpackung aus flexiblem Material, wie insbesondere Kunststoffolie, z.B. Polyäthylenfolie, gebildet. Anstelle von Kunststoffolien können jedoch auch andere geeignete flexible Materialien, wie reiß- und naßfeste Papiere oder Laminate Verwendung finden. Bei dem dargestellten Beispiel ist als Werkstoff eine Kunststoffolie angenommen.

Die Verpackung ist von einem Schlauchabschnitt 1 gebildet, der ausgehend von einer Kunststoffolien-Flachbahn durch Anbringen einer schlauchbildenden Längsnaht 2 an einander überlappenden Randteilen der Flachbahn hergestellt worden ist. Die Seitenränder 3 und 4 werden bei der Schlauchbildung flachgelegt, und zur Herstellung der einzelnen Schlauchabschnitte 1 werden entsprechende Quertrennungen der Schlauchbahn vorgenommen.

Der Schlauchabschnitt 1 umfaßt ferner eine Zwischenlage 5, die bei dem dargestellten Beispiel ebenfalls aus einer geeigneten Kunststoffolie besteht, jedoch eine geringere Dicke als die den Schlauchabschnitt 1 bildende Kunststoffolie aufweisen kann. Die Zwischenlage 5 wird im Zuge der Herstellung des Folienschlauches, von dem die Schlauchabschnitte 1 abgetrennt werden, in diesen eingearbeitet, so daß jeder Schlauchabschnitt mit einer Zwischenlage 5 versehen ist. Die Länge der Zwischenlage 5 entspricht dabei der des Schlauchabschnitts 1, während ihre Breite der der Folienflachbahn entspricht, von der ausgehend der Folienschlauch bzw. Schlauchabschnitt 1 hergestellt wird.

An den beiden Stirnenden des Schlauchabschnitts 1 sind Verschlußnähte 6 angebracht, die entsprechend der angenommenen Verwendung von Kunststoffolie als Werkstoff für den Schlauchabschnitt 1 und die Zwischenlage 5 von Schweißnähten gebildet sind. In die Verschlußnähte 6 sind jeweils die Endbereiche der Zwischenlage 5 einbezogen, so daß die Zwischenlage 5 in diesen Bereichen fest mit dem Schlauchabschnitt 1 verbunden ist. Ferner ist die Zwischenlage 5 in ihren außerhalb der Seitenränder 3,4 des Schlauchabschnitts 1 liegenden seitlichen Bereichen 8 und 9 an ihren beiden Enden jeweils durch Verbindungsnähte 10 fest mit der Vorderwand 11 des Schlauchabschnitts 1 verbunden, dessen die Längsnaht 2 enthaltende Rückwand mit 12 bezeichnet ist. Die Verbindungsnähte 10 sind ebenfalls Schweißnähte.

Im Bereich zwischen ihren beiden Enden ist die Zwischenlage 5 nur durch streifenförmige Verbindungsmittel 13 außen entlang den beiden Längsrändern 3,4 des Schlauchabschnitts 1 mit dessen Vorderwand 11 lösbar verbunden. Die streifenförmigen Verbindungsmittel 13 bestehen aus haftkleberartigen Klebstoffaufträgen, so daß diese Verbindung zwischen der Zwischenlage 5 und der Vorderwand 11 leicht lösbar ist.

Bei der in dieser Weise mit dem Schlauchabschnitt 1 verbundenen Zwischenlage 5 bildet deren mittlerer Bereich 7 eine innere Begrenzungswand eines Aufnahmeraums 14, der eine Hygienestreufüllung enthält. Außenseitig ist der Aufnahmeraum 14 von der Rückwand 12 des Schlauchabschnitts 1 und seitlich von den mittels der Klebstoffaufträge 13 gebildeten Materialverbindungen begrenzt. Die Hygienestreufüllung kann im Zuge der Schlauchbildung in den jeweiligen Aufnahmeraum 14 eingebracht werden, so daß von der Schlauchbahn jeweils eine Hygienestreufüllung enthaltende Schlauchabschnitte 1 als fertige Verpackung mit Verschlußnähten 6 an beiden Stirnenden abgetrennt werden. Es ist aber auch möglich, zunächst nur die Schlauchabschnitte 1 als Leerverpackung herzustellen, wobei nur eines der beiden Stirnenden mit einer Verschlußnaht 6 versehen ist. Die Verschlußnaht 6 am anderen Stirnende wird dabei nach der Befüllung des Füllraums 14 in einem Abfüllbetrieb angebracht.

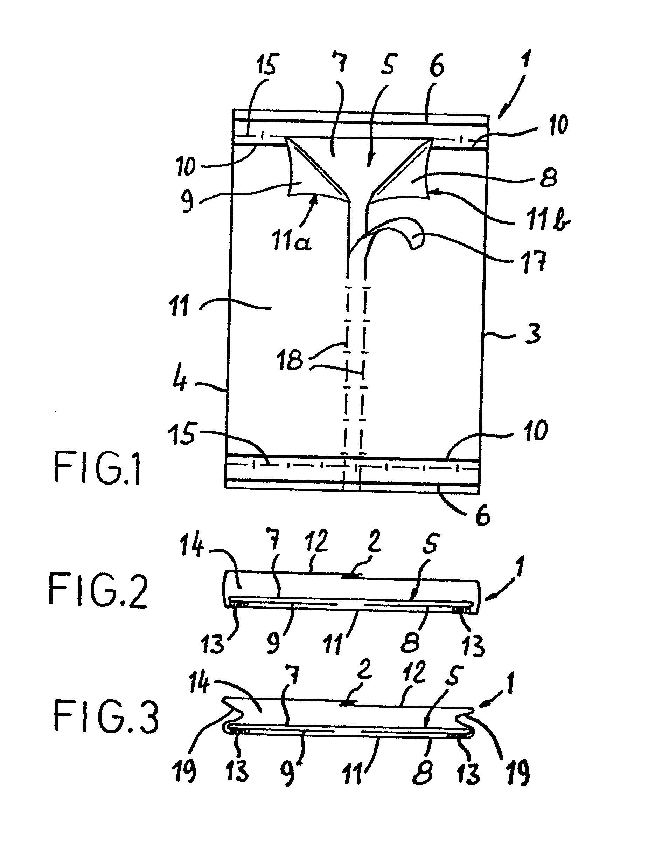

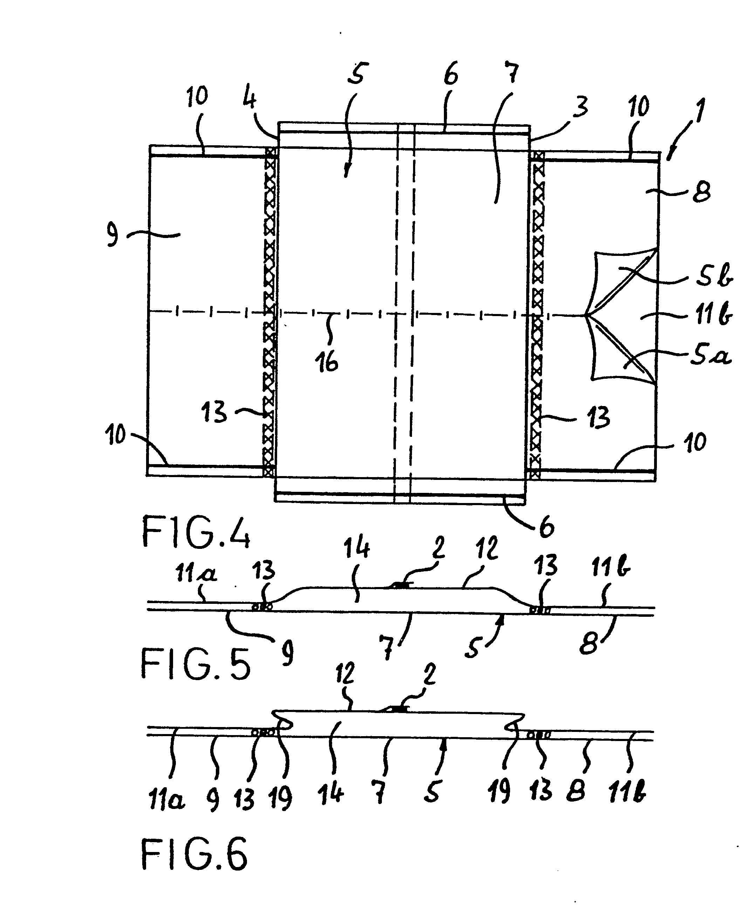

In jedem Fall sind die Verschlußnähte 6 und die seitlichen Verbindungsnähte 10, die die Zwischenlagenbereiche 8 und 9 mit der Vorderwand 11 verbinden, in Längsrichtung des Schlauchabschnitts 1 mit einem kleinen Abstand voneinander angeordnet, und zwischen diesen Nähten 6 und 10 sind Schwächungslinien 15 in die Vorderwand 11 des Schlauchabschnitts 1 unter Einbeziehung des Materials der Zwischenlage 5 eingearbeitet. Ferner ist die Zwischenlage 5 in ihrer Mitte zwischen den Verschluß- und Verbindungsnähten 6,10 mit einer quer zur Längsachse des Schlauchabschnitts 1 verlaufenden Schwächungslinie 16 (Fig. 4) versehen, die sich durchgehend über ihre gesamte Breite erstreckt. Im übrigen übergreift die Vorderwand 11 mit den an ihrer Innenseite lose anliegenden Seitenbereichen 8 und 9 der Zwischenlage 5 wiederum lose deren mittleren Bereich 7, wie es insbesondere aus Fig. 2 ersichtlich ist.

Zum Gebrauch der vom Schlauchabschnitt 1 gebildeten, die Hygienestreufüllung im Aufnahmeraum 14 enthaltenden Verpackung als Trockentoilette wird die Vorderwand 11 des Schlauchabschnitts 1 entlang einem Längsstreifen 17 aufgetrennt, der sich zwischen den endseitigen Schwächungslinien 15 der Vorderwand 11 erstreckt. Der Längsstreifen 17 ist dabei seinerseits auf seinen beiden Längsseiten von Schwächungslinien 18 begrenzt, die, wie die übrigen Schwächungslinien, von Perforationslinien gebildet sind. Die Seitenbereiche 8 und 9 der Zwischenlage 7 sind an ihren äußeren Seitenrändern um ein der Breite des Längsstreifens 17 entsprechendes Maß verkürzt.

Der Materialstreifen 17 kann bei dieser Ausgestaltung aus der Vorderwand 11 herausgetrennt werden, derart, daß die beiden verbleibenden Hälften 11a und 11b (Fig. 5) der Vorderwand 11 an ihren äußeren Rändern bündig mit den äußeren Rändern der Zwischenlagenbereiche 8 und 9 enden. Sodann werden auch die endseitigen Schwächungslinien 15 der Vorderwand 11 aufgetrennt, und die beiden Vorderwandhälften 11a und 11b werden nach außen um von den Seitenrändern 3,4 des Schlauchabschnitts 1 gebildete Schwenkachsen umgeklappt, wie es in Fig. 1 angedeutet ist. Die hierdurch entstandene Zwischenstufe beim Öffnen der Verpackung ist in den Fig. 4 und 5 dargestellt.

Ausgehend von der Zwischenstufe gemäß den Fig. 4 und 5 wird die mittlere Querschwächungslinie 16 der Zwischenlage 5 aufgetrennt, und die dadurch entstehenden beiden Hälften 5a und 5b der Zwischenlage 5 werden ihrerseits, wie in der rechten Hälfte der Fig. 4 angedeutet, nach außen entlang von den Verbindungsnähten 10 definierten Schwenkachsen umgeklappt. Der Aufnahmeraum 14 der mit ihrer Rückseite 12 beispielsweise auf den Fußboden aufgesetzten Verpackung ist dadurch oberseitig insgesamt geöffnet, und die Hygienestreufüllung im Aufnahmeraum 14 ist freigelegt. Zugleich ist durch die jeweils nach außen geklappten Hälften 11a und 11b der Vorderwand 11 und die Hälften 5a und 5b der Zwischenlage 5 eine entsprechend breite umlaufende Schürze im den Aufnahmeraum 14 gebildet, die auch in den Eckbereichen keine Unterbrechungen aufweist.

Bei einer abgewandelten Ausführungsform, wie sie in den Fig. 3 und 6 veranschaulicht ist, ist der Schlauchabschnitt 1 entlang seinen Seitenrändern mit je einer eingelegten Seitenfalte 19 versehen, während die Konstruktion im übrigen mit der oben beschriebenen Ausführungsform übereinstimmt, wie es auch die Verwendung gleicher Bezugszeichen für gleiche bzw. übereinstimmende Teile zum Ausdruck gebracht ist. Durch die eingelegten Seitenfalten 19 erhält der Aufnahmeraum 14 gegenüber der Ausführungsform nach den Fig. 1 und 2 bzw. 4 und 5 höhere Seitenränder , so daß diese Ausführungsform insbesondere als freitragendes Aufnahmebehältnis geeignet ist.

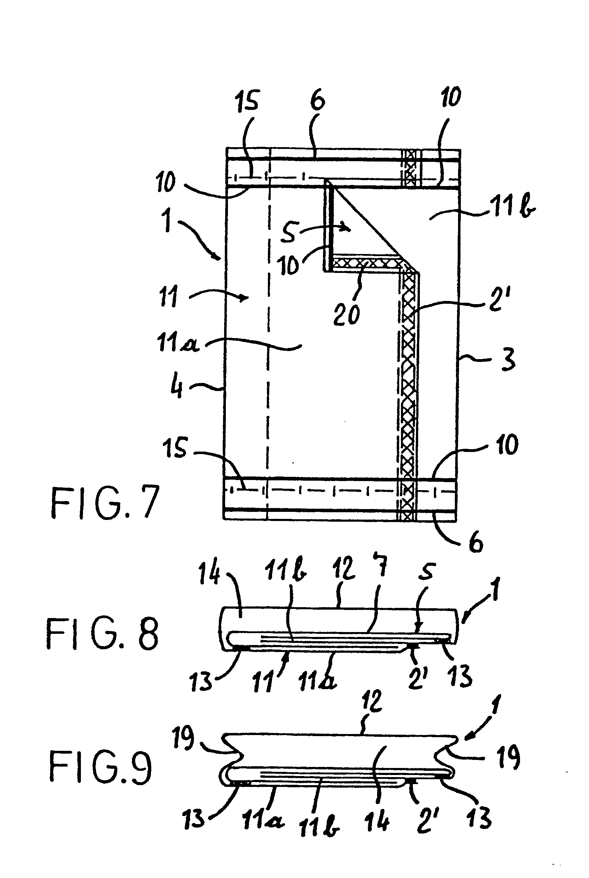

Bei dem Ausführungsbeispiel nach den Fig. 7 bis 12 findet zum Öffnen der Vorderwand 11 kein heraustrennbarer Materialstreifen 17 Anwendung, sondern die schlauchbildende Längsnaht 2' ist in die Vorderwand 11 verlegt und wird für den Öffnungsvorgang genutzt. Zu diesem Zweck ist die Längsnaht 2' als leicht auftrennbare Überlappungsnaht ausgebildet, was durch einen dauerhaftkleberartigen Klebstoffauftrag 20 auf der Innenseite der Vorderwand 11 erreicht ist. Die Vorderwand 11 selbst ist hierbei von gleichbreiten Überlappungsteilen 11a und 11b gebildet.

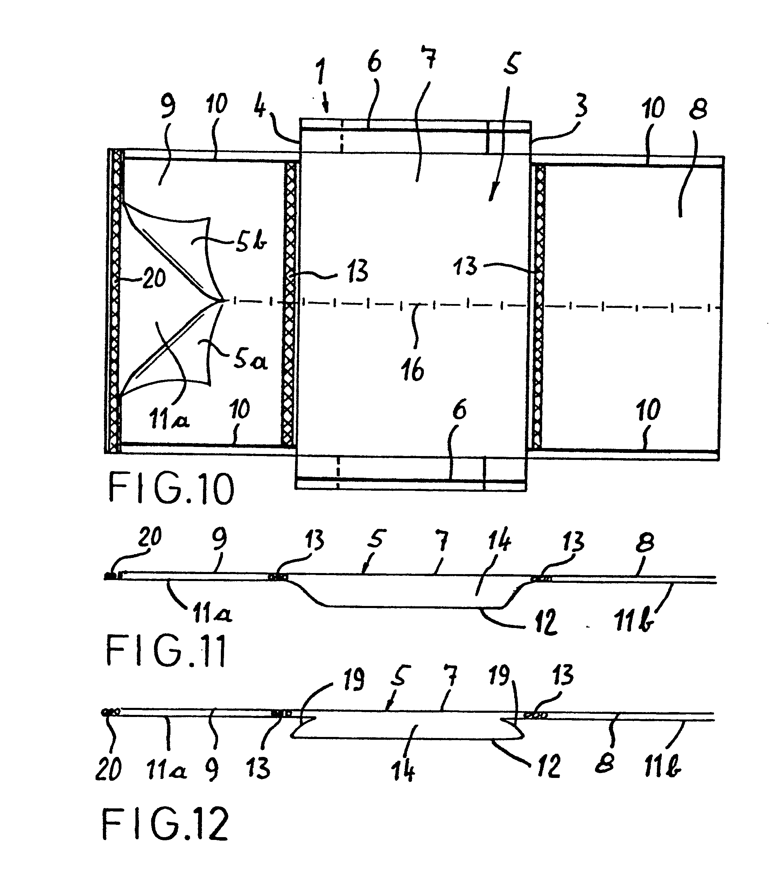

Nach dem Aufziehen der Überlappungsnaht 2', wie es in Fig. 7 angedeutet ist, und Auseinanderklappen der Überlappungsteile 11a und 11b unter Auftrennen der Perforationslinien 15 entsteht wiederum die Zwischenstufe gemäß Fig. 10 und 11, in der der Füllraum 14 noch durch den mittleren Bereich 7 der Zwischenlage 5 geschlossen ist. Durch Auftrennen der Perforationslinie 16 und Auseinanderklappen der dadurch gebildeten Zwischenlagenhälften 5a und 5b um die von den Verbindungsnähten 10 definierten Schwenkachsen entsteht wiederum eine um den auf diese Weise oberseitig offengelegten Aufnahmeraum 14 durchgehende umlaufende Schürze, deren Breite von der Breite der Überlappungsteile 11a und 11b der Vorderwand 11 und der quer dazu gemessenen Breite der Zwischenlagenhälften 5a und 5b bestimmt ist.

Der dauerhaftkleberartige Klebstoffauftrag 20, der ein mehrfaches Lösen und Wiederherstellen der Überlappungsnaht 2' ermöglicht, ist entsprechend dem dargestellten Beispiel auf der Innenseite des äußeren Randes des äußeren Überlappungsteils 11a angeordnet, wobei der Seitenbereich 9 der Zwischenlage 5 an seinem Außenrand entsprechend der Breite des Klebstoffauftrags 20 verkürzt ist. Der Klebstoffauftrag 20 ermöglicht es insbesondere, die Verpackung nach Gebrauch der Trockentoilette zur Abfallbeseitigung wieder größtenteils zu verschließen, sofern dies nicht durch vom Füllgut herrührende Staubablagerungen verhindert wird. Zum Verschließen der gebrauchten Trockentoilette werden die Vorderwandhälften 11a und 11b sowie die Zwischenlagenhälften 5a und 5b bei sämtlichen Ausführungsformen einfach in umgekehrter Reihenfolge in ihre Ausgangslage zurückgefaltet.

Die Abwandlung gemäß den Fig. 9 und 12 entspricht der Abwandlung gemäß den Fig. 3 und 6, wonach in den Schlauchabschnitt 1 wiederum die Seitenfalten 19 eingelegt sind. Im übrigen entspricht diese Variante der oben anhand der Fig. 7 und 8 bzw. 10 und 11 beschriebenen Ausführungsform, wie es wiederum durch die Verwendung gleicher Bezugszeichen für gleiche bzw. übereinstimmende Teile kenntlich gemacht ist. Dies gilt auch für die Ausführungsform gemäß den Fig. 7,8,10 und 11 in bezug auf die Ausführungsform gemäß den Fig. 1,2,4 und 5. Auf eine nochmalige Beschreibung der insoweit übereinstimmenden Teile wird dabei verzichtet.

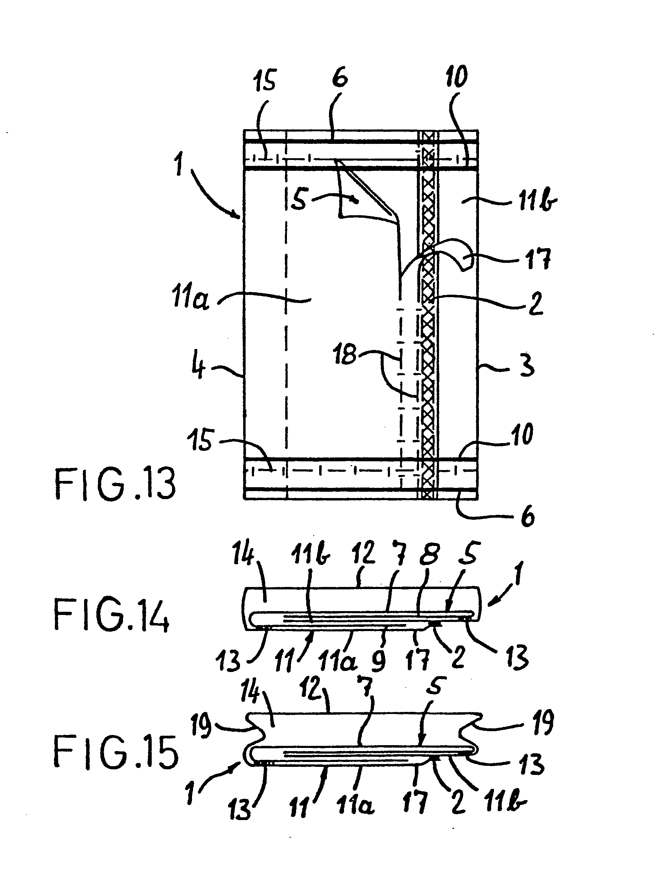

Um eine durchgehend im wesentlichen gleiche Breite der durch Auffalten der Verpackungsteile gebildeten Schürze entlang allen vier Seiten des rechteckigen Aufnahmeraums 14 zu erhalten, empfiehlt es sich, die zwischen den seitlichen Verbindungsnähten 10 gemessene Länge der Zwischenlage 5 und die Breite des Schlauchabschnitts 1 entsprechend aufeinander abzustimmen. Dies gilt für sämtliche Ausführungsformen einschließlich der in den Fig. 13 bis 15 veranschaulichten weiteren Abwandlungen.

Bei der Abwandlung gemäß den Fig. 13 und 14 ist die Ausgestaltung ähnlich dem Ausführungsbeispiel nach den Fig. 7 und 8 bzw. 10 und 11 gewählt, wobei jedoch die einander überlappenden Wandteile 11a und 11b der Vorderwand 11 nicht durch eine leicht auftrennbare Überlappungsnaht miteinander schlauchbildend verbunden sind, sondern statt dessen die als solche unlösbare schlauchbildende Längsnaht 2 des Ausführungsbeispiels nach den Fig. 1 und 2 bzw. 4 und 5, die in an sich bekannter Weise von einer Schweiß- oder Siegelnaht gebildet ist, Anwendung findet. Um die Vorderwand 11 hierbei leicht öffnen zu können, ist im äußeren Vorderwandteil 11a der beidseits von Schwächungslinien 18 begrenzte heraustrennbare Längsstreifen 17 vorgesehen. Die Überlappungsteile 11a und 11b der Vorderwand 11 besitzen wie im Falle des Ausführungsbeispiels nach den Fig. 7 und 8 bzw. 10 und 11 im wesentlichen die gleiche Breite, und der Längsstreifen 17 ist nahe der Längsnaht 2 in zu dieser paralleler Ausrichtung im äußeren Vorderwandteil 11a angeordnet. Der seitliche, an dem äußeren Vorderwandteil 11a anliegende Bereich 9 der Zwischenlage 5 ist an seinem freien Rand entsprechend der Breite des Aufreißstreifens 17 verkürzt, so daß nach dem Heraustrennen des Aufreißstreifens 17 die äußere Randkante des Zwischenlagenbereichs 9 im wesentlichen bündig mit der durch Heraustrennen des Aufreißstreifens 17 gebildeten äußeren Randkante des Vorderwandteils 11a verläuft.

Die Fig. 15 veranschaulicht wiederum die Variante mit den eingelegten Seitenfalten 19, während im übrigen die gleichen Verhältnisse wie bei der Ausführungsform nach den Fig. 13 und 14 vorliegen.

**Patentansprüche**

**Patentansprüche Für folgende Vertragsstaaten: AT, BE, CH, DE, FR, IT, LI, NL, SE, GB**

1. Trockentoilette für Haustiere, insbesondere Katzen, bestehend aus einer Einweg-Weichverpackung aus flexiblem Material mit einem eine Hygienestreufüllung enthaltenden, allseits geschlossenen Aufnahmeraum (14), der zum Gebrauch der Verpackung unter Auftrennen einer gesonderten Flachmateriallage oberseitig freilegbar ist, wobei die Weichverpackung von einem entlang seinen Seitenrändern (3, 4) flachgelegten, ausgehend von einer Flachbahn durch eine schlauchbildende Längsnaht (2; 2') geschlossenen Schlauchabschnitt (1) gebildet ist und die gesonderte Flachmateriallage aus einer im Inneren des Schlauchabschnitts angeordneten, in ihrer Länge der des Schlauchabschnitts entsprechenden Zwischenlage (5) besteht; von den einander gegenüberliegenden Breitseiten des Aufnahmeraums die äußere von der Rückwand (12) des Schlauchabschnitts und die innere von einer von der Zwischenlage gebildeten Begrenzungswand (7) eingenommen ist; und zur Freilegung des Aufnahmeraums die an die Zwischenlage angrenzende Vorderwand (11) des Schlauchabschnitts um von dessen Seitenrändern gebildete Schwenkachsen und die Zwischenlage quer dazu jeweils in entgegengesetzten Richtungen hälftig aufklappbar sind, wobei die die von der Zwischenlage (5) gebildete innere Begrenzungswand (7) des Aufnahmeraums (14) lose mit den Seitenbereichen (8, 9) der Zwischenlage übergreifende Vorderwand (11) des Schlauchabschnitts (1) entlang einem Längsstreifen (2'; 17) auftrennbar ist.

2. Trockentoilette nach Anspruch 1, dadurch gekennzeichnet, daß an den beiden Stirnenden des Schlauchabschnitts (1) Verschlußnähte (6) angebracht sind, in die jeweils die Endbereiche der Zwischenlage (5) einbezogen sind.

3. Trockentoilette nach Anspruch 1 oder 2, dadurch gekennzeichnet, daß die Zwischenlage (5) in ihren außerhalb der Seitenränder (3,4) des Schlauchabschnitts (1) liegenden seitlichen Bereichen (8,9) an ihren beiden Enden jeweils durch Verbindungsnähte (10) fest mit der Vorderwand (11) des Schlauchabschnitts verbunden ist.

4. Trockentoilette nach einem der Ansprüche 1 bis 3, dadurch gekennzeichnet, daß die Zwischenlage (5) im Bereich zwischen ihren beiden Enden nur durch streifenförmige Verbindungsmittel (13) entlang den beiden Seitenrändern (3,4) des Schlauchabschnitts (1) mit dessen Vorderwand (11) lösbar verbunden ist.

5. Trockentoilette nach Anspruch 4, dadurch gekennzeichnet, daß die Verbindung mittels der streifenförmigen Verbindungsmittel (13) von dauerhaftkleberartigen Klebstoffaufträgen gebildet ist.

6. Trockentoilette nach den Ansprüchen 2 und 3, dadurch gekennzeichnet, daß die Verschlußnähte (6) des Schlauchabschnitts (1) und die seitlichen Verbindungsnähte (10) der Zwischenlage (5) in Schlauchlängsrichtung mit Abstand voneinander angeordnet sind und zwischen den Nähten Schwächungslinien (15) in die Vorderwand (11) des Schlauchabschnitts (1) unter Einbeziehung der Zwischenlage (5) eingearbeitet sind.

7. Trockentoilette nach einem der Ansprüche 1 bis 6, dadurch gekennzeichnet, daß die Zwischenlage (5) in ihrer Mitte zwischen den Verschluß- und Verbindung nähten (6,10) mit einer quer zur Längsachse des Schlauchabschnitts (1) verlaufenden, sich über ihre gesamte Breite erstreckenden Schwächungslinie (16) versehen ist

8. Trockentoilette nach einem der Ansprüche 1 bis 7, dadurch gekennzeichnet, daß der Längsstreifen (17) von einem beidseits von Schwächungslinien (18) begrenzten heraustrennbarem Materialstreifen der Vorderwand (11) gebildet ist.

9. Trockentoilette nach Anspruch 8, dadurch gekennzeichnet, daß der Materialstreifen (17) in der Mitte der Vorderwand (11) des Schlauchabschnitts (1) angeordnet ist.

10. Trockentoilette nach einem der Ansprüche 1 bis 7, dadurch gekennzeichnet, daß dei schlauchbildende Längsnaht (2') von einer leicht auftrennbaren Überlappungsnaht gebildet ist.

11. Trockentoilette nach Anspruch 10, dadurch gekennzeichnet, daß die Überlappungsnaht (2') mittels eines dauerhaftkleberartigen Klebstoffauftrag (20) gebildet ist.

12. Trockentoilette nach einem der Ansprüche 1 bis 8, dadurch gekennzeichnet, daß die schlauchbildende Längsnaht (2) in Form einer Schweiß- oder Siegelnaht in der einander überlappende Wandteile (11a, 11b) umfassenden Vorderwand (11) des Schlauchabschnitts (1) gebildet und der auftrennbare Längsstreifen (17) am äußeren Vorderwandteil (11a) angeordnet ist.

13. Trockentoilette nach Anspruch 12, dadurch gekennzeichnet, daß der auftrennbare Längsstreifen (17) nahe der Längsnaht (2) in zu dieser parallelen Ausrichtung angeordnet ist.

14. Trockentoilette nach einem der Ansprüche 12 oder 13, dadurch gekennzeichnet, daß die Vorderwand (11) des Schlauchabschnitts (1) von gleichbreiten Überlappungsteilen (11a, 11b) des Schlauchmaterials gebildet ist.

15. Trockentoilette nach einem der Ansprüche 3 bis 14, dadurch gekennzeichnet, daß die zwischen den seitlichen Verbindungsnähten (10) gemessene Länge der Zwischenlage (5) in etwa der Breite des Schlauchabschnitts (1) entspricht.

16. Trockentoilette nach einem der vorangehenden Ansprüche, dadurch gekennzeichnet, daß der Schlauchabschnitt (1) entlang seinen Seitenrändern mit je einer eingelegten Seitenfalte (19) versehen ist.

**Patentansprüche Für folgende Vertragsstaaten: ES, GR**

1. Trockentoilette für Haustiere, insbesondere Katzen, bestehend aus einer Einweg-Weichverpackung aus flexiblem Material mit einem eine Hygienestreufüllung enthaltenden, allseits geschlossenen Aufnahmeraum (14), der zum Gebrauch der Verpackung unter Auftrennen einer Flachmateriallage oberseitig freilegbar ist, wobei die Weichverpackung von einem entlang seinen Seitenrändern (3, 4) flachgelegten, ausgehend von einer Flachbahn durch eine schlauchbildende Längsnaht (2; 2') geschlossenen Schlauchabschnitt (1) gebildet ist, von den einander gegenüberliegenden Breitseiten des Aufnahmeraums die äußere von der Rückwand (12) des Schlauchabschnitts eingenommen ist und zur Freilegung des Aufnahmeraums die Vorderwand (11) des Schlauchabschnitts um von dessen Seitenrändern (3, 4) gebildete Schwenkachsen hälftig aufklappbar ist, **dadurch gekennzeichnet daß eine gesonderte**

Flachmateriallage vorgesehen ist, die aus einer im Inneren des Schlauchabschnitts (1) angeordneten, in ihrer Länge der des Schlauchabschnitts und in ihrer Breite der der Ausgangsflachbahn entsprechenden Zwischenlage (5) besteht; daß von den einander gegenüberliegenden Breitseiten des Aufnahmeraums (14) die innere von einer von der Zwischenlage gebildeten Begrenzungswand (7) eingenommen ist; und daß die zur Freilegung des Aufnahmeraums hälftig aufklappbare Vorderwand (11) an die Zwischenlage angrenzt, die quer dazu jeweils in entgegengesetzten Richtungen ebenfalls hälftig aufklappbar ist.

2. Trockentoilette nach Anspruch 1, dadurch gekennzeichnet, daß an den beiden Stirnenden des Schlauchabschnitts (1) Verschlußnähte (6) angebracht sind, in die jeweils die Endbereiche der Zwischenlage (5) einbezogen sind.

3. Trockentoilette nach Anspruch 1 oder 2, dadurch gekennzeichnet, daß die Zwischenlage (5) in ihren außerhalb der Seitenränder (3,4) des Schlauchabschnitts (1) liegenden seitlichen Bereichen (8,9) an ihren beiden Enden jeweils durch Verbindungsnähte (10) fest mit der Vorderwand (11) des Schlauchabschnitts verbunden ist.

4. Trockentoilette nach einem der Ansprüche 1 bis 3, dadurch gekennzeichnet, daß die Zwischenlage (5) im Bereich zwischen ihren beiden Enden nur durch streifenförmige Verbindungsmittel (13) entlang den beiden Seitenrändern (3,4) des Schlauchabschnitts (1) mit dessen Vorderwand (11) lösbar verbunden ist.

5. Trockentoilette nach Anspruch 4, dadurch gekennzeichnet, daß die Verbindung mittels der streifenförmigen Verbindungsmittel (13) von dauerhaftkleberartigen Klebstoffaufträgen gebildet ist.

6. Trockentoilette nach den Ansprüchen 2 und 3, dadurch gekennzeichnet, daß die Verschlußnähte (6) des Schlauchabschnitts (1) und die seitlichen Verbindungsnähte (10) der Zwischenlage (5) in Schlauchlängsrichtung mit Anstand voneinander angeordnet sind und zwischen den Nähten Schwächungslinien (15) in die Vorderwand (11) des Schlauchabschnitts (1) unter Einbeziehung der Zwischenlage (5) eingearbeitet sind.

7. Trockentoilette nach einem der Ansprüche 1 bis 6, dadurch gekennzeichnet, daß die Zwischenlage (5) in ihrer Mitte zwischen den Verschluß- und Verbindungsnähten (6,10) mit einer quer zur Längsachse des Schlauchabschnitts (1) verlaufenden, sich über ihre gesamte Breite erstreckenden Schwächungslinie (16) versehen ist.

8. Trockentoilette nach einem der Ansprüche 1 bis 7, dadurch gekennzeichnet, daß die die von der Zwischenlage (5) gebildete innere Begrenzungswand (7) des Füllraums (14) lose mit den Seitenbereichen (8,9) der Zwischenlage übergreifende Vorderwand (11) des Schlauchabschnitts (1) entlang einem Längsstreifen (17) auftrennbar ist.

9. Trockentoilette nach Anspruch 8, dadurch gekennzeichnet, daß der Längsstreifen (17) von einem beidseits von Schwächungslinien (18) begrenzten, heraustrennbaren Materialstreifen der Vorderwand (11) gebildet ist.

10. Trockentoilette nach Anspruch 9, dadurch gekennzeichnet, daß der Materialstreifen (17) in der Mitte der Vorderwand (11) des Schlauchabschnitts (1) angeordnet ist.

11. Trockentoilette nach einem der Ansprüche 1 bis 7, dadurch gekennzeichnet, daß die schlauchbildende Längsnaht (2') von einer leicht aufrennbaren Überlappungsnaht gebildet ist.

12. Trockentoilette nach Anspruch 11, dadurch gekennzeichnet, daß die Überlappungsnaht (2') mittels eines dauerhaftkleberartigen Klebstoffauftrags (20) gebildet ist.

13. Trockentoilette nach Anspruch 8 oder 9, dadurch gekennzeichnet, daß die schlauchbildende Längsnaht (2) in Form einer Schweiß- oder Siegelnaht in der einander überlappende Wandteile (11a,11b) umfassenden Vorderwand (11) des Schlauchabschnitts (1) gebildet und der auftrennbare Längsstreifen (17) im äußeren Vorderwandteil (11a) angeordnet ist.

14. Trockentoilette nach Anspruch 13, dadurch gekennzeichnet, daß der auftrennbare Längsstreifen nahe der Längsnaht (2) in zu dieser paralleler Ausrichtung angeordnet ist.

15. Trockentoilette nach einem der Ansprüche 11 bis 14, dadurch gekennzeichnet, daß die Vorderwand (11) des Schlauchabschnitts (1) von gleichbreiten Überlappungsteilen (11a,11b) des Schlauchmaterials gebildet ist.

16. Trockentoilette nach einem der Ansprüche 3 bis 15, dadurch gekennzeichnet, daß die zwischen den seitlichen Verbindungsnähten (10) gemessene Länge der Zwischenlage (5) in etwa der Breite des Schlauchabschnitts (1) entspricht.

17. Trockentoilette nach einem der Ansprüche 1 bis 16, dadurch gekennzeichnet, daß der Schlauchabschnitt (1) entlang seinen Seitenrändern mit je einer eingelegten Seitenfalte (19) versehen ist.

**Claims**

**Claims for the following Contracting States: AT, BE, CH, DE, FR, IT, LI, NL, SE, GB**

1. Dry toilet for domestic animals, in particular cats, composed of a disposable soft packing made of flexible material having a receptacle space (14) which contains a filling of sanitary litter, is closed on all sides and can be exposed at the top for use of the packing by separation of a separate layer of flat material, the soft packing being formed by a tubular section (1), which is placed flat along its side edges (3, 4) and, starting from a flat web, is closed by a longitudinal seam (2; 2') forming the tube, the separate layer of flat material consisting of an intermediate layer (5) which is arranged in the interior of the tubular section and corresponds in its length to that of the tubular section; the outer broad side of the broad sides of the receptacle space situated opposite each other being taken up by the rear wall (12) of the tubular section and the inner broad side being taken up by a boundary wall (7) formed by the intermediate layer; and it being possible for the front wall (11) of the tubular section which is adjacent to the intermediate layer to be opened out about swivel axes formed by the side edges of said tubular section and the intermediate layer transversely thereto in opposite direction in two halves to expose the receptacle space, wherein the front wall (11) extending over the inner boundary wall (7) of the receptacle space (14) formed by the intermediate layer (5) loosely with the side parts (8, 9) of the intermediate layer of the tubular section (1) can be separated along a longitudinal seam (2'; 17).

2. Dry toilet according to Claim 1, characterised in that closure seams (6) are formed at the two front ends of the tubular section (1), in which closure seams the end regions of the intermediate layer (5) are incorporated in each case.

3. Dry toilet according to Claim 1 or 2, characterised in that the intermediate layer (5) is fixedly connected to the front wall (11) of the tubular section by connection seams (10) at its two ends in each case, in its side regions (8, 9) situated outside the side edges (3, 4) of the tubular section (1).

4. Dry toilet according to one of Claims 1 to 3, characterised in that, in the region between its two ends, the intermediate layer (5) is detachably connected to the front wall (11) of the tubular section (1) only by strip-shaped connection means (13) along the two side edges (3, 4) of said tubular section.

5. Dry toilet according to Claim 4, characterised in that the connection by means of the strip-shaped connection means (13) is formed by adhesive coatings in the manner of durable adhesive.

6. Dry toilet according to Claims 2 and 3, characterised in that the closure seams (6) of the tubular section (1) and the side connection seams (10) of the intermediate layer (5) are arranged spaced apart in the longitudinal direction of the tube and weakening lines (15) are machined into the front wall (11) of the tubular section (1) between the seams, incorporating the intermediate layer (5).

7. Dry toilet according to one of Claims 1 to 6, characterised in that the intermediate layer (5) is provided in its centre between the closure and connection seams (6, 10) with a weakening line (16) running transversely to the longitudinal axis of the tubular section (1) and extending over its entire width.

8. Dry toilet according to one of Claims 1 to 7, characterised in that the longitudinal strip (17) is formed by a material strip of the front wall (11), which material strip is bounded on both sides by weakening lines (18) and can be taken out.

9. Dry toilet according to Claim 8, characterised in that the material strip (17) is arranged in the centre of the front wall (11) of the tubular section (1).

10. Dry toilet according to Claim 1 to 7, characterised in that the longitudinal seam (2') forming the tube is formed by an easily separable overlapping seam.

11. Dry toilet according to Claim 10, characterised in that the overlapping seam (2') is formed by means of an adhesive coating (20) in the manner of a durable adhesive.

12. Dry toilet according to one of Claims 1 to 8, characterised in that the longitudinal seam (2) forming the tube in the form of a welded or sealed seam is formed in the front wall (11) of the tubular section (1) comprising mutually overlapping wall parts (11a, 11b) and the separable longitudinal strip (17) is arranged in the outer front wall part (11a).

13. Dry toilet according to Claim 12, characterised in that the separable longitudinal strip is arranged near to the longitudinal seam (2) in an alignment parallel to said longitudinal seam.

14. Dry toilet according to Claim 12 or 13, characterised in that the front wall (11) of the tubular section (1) is formed by overlapping parts (11a, 11b) of equal width, of the tubular material.

15. Dry toilet according to one of Claims 3 to 14, characterised in that the length of the intermediate layer (5) measured between the side connection seams (10) corresponds approximately to the width of the tubular section (1).

16. Dry toilet according to one of the preceeding Claims, characterised in that the tubular section (1) is provided along its side edges with an inserted side fold (19) in each case.

**Claims for the following Contrating States: ES, GR**

1. Dry toilet for domestic animals, in particular cats, composed of a disposable soft packing made of flexible material having a receptacle space (14) which contains a filling of sanitary litter, is closed on all sides and can be exposed at the top for use of the packing by separation of a layer of flat material, the soft packing being formed by a tubular section (1), which is placed flat along its side edges (3, 4) and, starting from a flat web, is closed by a longitudinal seam (2; 2') forming the tube, the outer broad side of the broad sides of the receptacle space situated opposite each other being taken up by the rear wall (12) of the tubular section, and it being possible for the front wall (11) of the tubular section to be opened out in two halves about swivel axes formed by the side edges (3, 4) of said tubular section to expose the receptacle space, characterised in that a separate layer of flat material is provided which is composed of an intermediate layer (5) which is arranged in the interior of the tubular section (1) and corresponds in its length to that of the tubular section and in its width to that of the original flat web, in that the inner broad side of the broad sides of the receptacle space (14) situated opposite each other is taken up by a boundary wall (7) formed by the intermediate layer, and in that the front wall (11), which can be opened out in two halves to expose the receptacle space, adjoins the intermediate layer which can likewise be opened out in two parts transversely thereto in opposite directions in each case.

2. Dry toilet according to Claim 1, characterised in that closure seams (6) are formed at the two front ends of the tubular section (1), in which closure seams the end regions of the intermediate layer (5) are incorporated in each case.

3. Dry toilet according to Claim 1 or 2, characterised in that the intermediate layer (5) is fixedly connected to the front wall (11) of the tubular section by connection seams (10) at its two ends in each case, in its side regions (8, 9) situated outside the side edges (3, 4) of the tubular section (1).

4. Dry toilet according to one of Claims 1 to 3, characterised in that, in the region between its two ends, the intermediate layer (5) is detachably connected to the front wall (11) of the tubular section (1) only by strip-shaped connection means (13) along the two side edges (3, 4) of said tubular section.

5. Dry toilet according to Claim 4, characterised in that the connection by means of the strip-shaped connection means (13) is formed by adhesive coatings in the manner of durable adhesive.

6. Dry toilet according to Claims 2 and 3, characterised in that the closure seams (6) of the tubular section (1) and the side connection seams (10) of the intermediate layer (5) are arranged spaced apart in the longitudinal direction of the tube and weakening lines (15) are machined into the front wall (11) of the tubular section (1) between the seams, incorporating the intermediate layer (5).

7. Dry toilet according to one of Claims 1 to 6, characterised in that the intermediate layer (5) is provided in its centre between the closure and connection seams (6, 10) with a weakening line (16) running transversely to the longitudinal axis of the tubular section (1) and extending over its entire width.

8. Dry toilet according to one of Claims 1 to 7, characterised in that the front wall (11) of the tubular section (1) is separable along a longitudinal strip (17), said front wall loosely covering with the side regions (8, 9) of the intermediate layer the inner boundary wall (7) of the filling space (14) formed by the intermediate layer (5).

9. Dry toilet according to Claim 8, characterised in that the longitudinal strip (17) is formed by a material strip of the front wall (11), which material strip is bounded on both sides by weakening lines (18) and can be taken out.

10. Dry toilet according to Claim 9, characterised in that the material strip (17) is arranged in the centre of the front wall (11) of the tubular section (1).

11. Dry toilet according to one of Claims 1 to 7, characterised in that the longitudinal seam (2') forming the tube is formed by an easily separable overlapping seam.

12. Dry toilet according to Claim 11, characterised in that the overlapping seam (2') is formed by means of an adhesive coating (20) in the manner of a durable adhesive.

13. Dry toilet according to Claim 8 or 9, characterised in that the longitudinal seam (2) forming the tube in the form of a welded or sealed seam is formed in the front wall (11) of the tubular section (1) comprising mutually overlapping wall parts (11a, 11b) and the separable longitudinal strip (17) is arranged in the outer front wall part (11a).

14. Dry toilet according to Claim 13, characterised in that the separable longitudinal strip is arranged near to the longitudinal seam (2) in an alignment parallel to said longitudinal seam.

15. Dry toilet according to one of Claims 11 to 14, characterised in that the front wall (11) of the tubular section (1) is formed by overlapping parts (11a, 11b) of equal width, of the tubular material.

16. Dry toilet according to one of Claims 3 to 15, characterised in that the length of the intermediate layer (5) measured between the side connection seams (10) corresponds approximately to the width of the tubular section (1).

17. Dry toilet according to one of Claims 1 to 16, characterised in that the tubular section (1) is provided along its side edges with an inserted side fold (19) in each case.

**Revendications**

**Revendications pour les Etats contractants suivants: AT, BE, CH, DE, FR, IT, LI, NL, SE, GB**

1. Toilette sèche pour animaux de compagnie, notamment des chats, constituée d'un emballage souple utilisable une fois en matériau flexible avec un remplissage de granulé hygiénique, comprenant une chambre réceptacle (14) fermée de tous côtés, qu'on prépare à l'utilisation par le dessus par enlèvement d'une couche spéciale de matériau plat, l'emballage souple étant formé d'une section de poche (1) fermée par un cordon longitudinal (2,2') formant poche en partant d'une feuille plane, le cordon étant parallèle aux bords latéraux (3,4) et la couche de matériau plat spéciale est constituée d'une couche intermédiaire (5) correspondant en longueur à celle de la section de poche, et placée à l'intérieur de la section de poche ; l'extérieur de la paroi dorsale (12) de la section de poche et la paroi (7) de délimitation interne formée par l'une des couches internes sont entourés par les largeurs opposées de la chambre réceptacle ; et pour dégager la chambre réceptacle, on peut ouvrir par moitié en sens opposé la paroi antérieure (11) contiguë à la couche intermédiaire de la section de poche, autour des axes de pivotement formés par ses bords latéraux, ainsi que la couche intermédiaire, transversalement, la paroi de limitation interne (7) formée par la couche intermédiaire (5) de la chambre réceptacle (14) peut être ouverte le long d'une bande longitudinale (2',17), en dépliant la paroi antérieure (11) de la section de poche recouvrant les domaines latéraux (8,9) de la couche intermédiaire.

2. Toilette sèche selon la revendication 1, caractérisée en ce qu'on dépose à chaque extrémité frontale de la section de poche (1) des cordons de fermeture (6) qui comprennent aussi les extrémités de la couche intermédiaire (5).

3. Toilette sèche selon la revendication 1 ou 2, caractérisée en ce que la couche intermédiaire (5) est reliée solidement par des cordons de liaison (10) à la paroi antérieure (11) de la section de poche, dans ses domaines (8,9) latéraux extérieurs aux bords (3,4) de la section de poche (1).

4. Toilette sèche selon l'une des revendications 1 à 3, caractérisée en ce que la couche intermédiaire (5) dans le domaine compris entre ses deux extrémités n'est reliée de manière détachable que par un moyen de liaison (13) en forme de bande le long des deux bords latéraux (3,4) de la section de poche (1) à sa paroi antérieure (11).

5. Toilette sèche selon la revendication 4, caractérisée en ce que la liaison par le moyen de liaison (13) comprend des dépôts d'adhésif permanent.

6. Toilette sèche selon les revendications 2 et 3, caractérisée en ce que les cordons de fermeture (6) de la section de poche (1) et les cordons de liaison latéraux (10) de la couche intermédiaire (5) sont disposés dans le sens longitudinal de la poche avec un espace entre eux et qu'on a ménagé entre les cordons des lignes de faiblesse (15) dans la paroi antérieure (11) de la section de poche (1) en incluant la couche intermédiaire (5).

7. Toilette sèche selon l'une des revendications 1 à 6, caractérisée en ce que la couche intermédiaire (5) comprend une ligne de faiblesse (16) s'étendant sur toute sa largeur au milieu, entre les cordons de fermeture et de liaison (6,10), perpendiculairement à l'axe longitudinal de la section de poche (1).

8. Toilette sèche selon l'une des revendications 1 à 7, caractérisée en ce que la bande longitudinale (17) est constituée d'une bande de matériau de la paroi antérieure (11) arrachable et délimitée de chaque côté par des lignes de faiblesse (18).

9. Toilette sèche selon la revendication 8, caractérisée en ce que la bande de matériau (17) est placée au milieu de la paroi antérieure (11) de la section de poche (1).

10. Toilette sèche selon l'une des revendications 1 à 7, caractérisée en ce que le cordon longitudinal (2') formant la poche est constitué d'un cordon de recouvrement facilement détachable.

11. Toilette sèche selon la revendication 10, caractérisée en ce qu'on forme le cordon de recouvrement (2') au moyen d'un dépôt d'adhésif permanent (20).

12. Toilette sèche selon l'une des revendications 1 à 8, caractérisée en ce qu'on forme le cordon longitudinal (2) formant poche en tant que cordon de soudure ou de scellage dans la paroi antérieure (11) de la section de poche (1) englobant les parties de paroi (11a,11b) se recouvrant et on dispose la bande longitudinale (17) détachable dans la partie externe de paroi antérieure (11a).

13. Toilette sèche selon la revendication 12, caractérisée en ce qu'on implante la bande longitudinale détachable (17) près du cordon longitudinal (2) parallèlement à lui.

14. Toilette sèche selon l'une des revendications 12 ou 13, caractérisée en ce qu'on forme la paroi antérieure (11) de la section de poche (1) de pièces de recouvrement de même largeur (11a,11b) du matériau de poche.

15. Toilette sèche selon l'une des revendications 3 à 14, caractérisée en ce que la longueur de la couche intermédiaire (5) mesurée entre les cordons de liaison latéraux (10) correspond approximativement à la largeur de la section de poche (1).

16. Toilette sèche selon l'une des revendications précédentes, caractérisée en ce que la section de poche (1) comprend le long de ses bords latéraux un pli latéral (19) incorporé.

**Revendications pour les Etats contractants suivants: ES, GR**

1. Toilette sèche pour animaux de compagnie, notamment des chats, constituée d'un emballage souple utilisable une fois, en matériau flexible avec un remplissage de granulé hygiénique, comprenant une chambre réceptacle (14) fermée de tous côtés, qu'on prépare à l'utilisation par le dessus par enlèvement d'une couche spéciale de matériau plat, l'emballage souple étant formé d'une section de poche (1) fermée par un cordon longitudinal (2,2') formant poche en partant d'une feuille plane, le cordon étant parallèle aux bords latéraux (3,4), l'extérieur de la paroi dorsale (12) de la section de poche entourée par les largeurs opposées de la chambre réceptacle ; et pour dégager la chambre réceptacle, on peut ouvrir par moitié en sens opposé la paroi antérieure (11) de la section de poche, autour des axes de pivotement formés par ses bords latéraux (3,4), caractérisée en ce qu'on prévoit une couche plane de matériau spécial constituée d'une couche intermédiaire (5) correspondant en longueur à celle de la section de poche et en largeur à celle de la feuille plane de départ, placée à l'intérieur de la section de poche (1), que la paroi interne de délimitation (7) formée par la couche intermédiaire est encadrée par les largeurs opposées de la chambre réceptacle (14) ; et que la paroi antérieure (11) dépliable par moitié pour libérer la chambre réceptacle aboute à la couche intermédiaire, qu'on peut ouvrir également par moitié en sens inverse, transversalement à la paroi intérieure.

2. Toilette sèche selon la revendication 1, caractérisée en ce qu'on dépose à chaque extrémité frontale de la section de poche (1) des cordons de fermeture (6) qui comprennent aussi les extrémités de la couche intermédiaire (5).

3. Toilette sèche selon la revendication 1 ou 2, caractérisée en ce que la couche intermédiaire (5) est reliée solidement par des cordons de liaison (10) à la paroi antérieure (11) de la section de poche, dans ses domaines (8,9) latéraux extérieurs aux bords (3,4) de la section de poche (1).

4. Toilette sèche selon l'une des revendications 1 à 3, caractérisée en ce que la couche intermédiaire (5) dans le domaine compris entre ses deux extrémités n'est reliée de manière détachable que par un moyen de liaison (13) en forme de bande le long des deux bords latéraux (3,4) de la section de poche (1) à sa paroi antérieure (11).

5. Toilette sèche selon la revendication 4, caractérisée en ce que la liaison par le moyen de liaison (13) comprend des dépôts d'adhésif permanent.

6. Toilette sèche selon les revendications 2 et 3, caractérisée en ce que les cordons de fermeture (6) de la section de poche (1) et les cordons de liaison latéraux (10) de la couche intermédiaire (5) sont disposés dans le sens longitudinal de la poche avec un espace entre eux et qu'on a ménagé entre les cordons des lignes de faiblesse (15) dans la paroi antérieure (11) de la section de poche (1) en incluant la couche intermédiaire (5).

7. Toilette sèche selon l'une des revendications 1 à 6, caractérisée en ce que la couche intermédiaire (5) comprend une ligne de faiblesse (16) s'étendant sur toute sa largeur au milieu, entre les cordons de fermeture et de liaison (6,10), perpendiculairement à l'axe longitudinal de la section de poche (1).

8. Toilette sèche selon l'une des revendications 1 à 7, caractérisée en ce qu'on peut arracher le long d'une bande longitudinale (17) la paroi antérieure (11) de la section de poche (1) recouvrant la paroi interne de délimitation (7) de la chambre de remplissage (14) formée par la couche intermédiaire (5), avec les zones latérales (8,9).

9. Toilette sèche selon la revendication 8, caractérisée en ce que la bande longitudinale (17) est constituée d'une bande de matériau détachable de la paroi antérieure (11) délimitée de chaque côté par une ligne de faiblesse (18).

10. Toilette sèche selon la revendication 9, caractérisée en ce que la bande de matériau (17) est placée au milieu de la paroi antérieure (11) de la section de poche (1).

11. Toilette sèche selon l'une des revendications 1 à 7, caractérisée en ce que le cordon longitudinal (2') formant la poche est constitué d'un cordon de recouvrement facilement détachable.

12. Toilette sèche selon la revendication 11, caractérisée en ce qu'on forme le cordon de recouvrement (2') au moyen d'un dépôt d'adhésif permanent (20).

13. Toilette sèche selon la revendication 8 ou 9, caractérisée en ce qu'on forme le cordon longitudinal (2) formant poche en tant que cordon de soudure ou de scellage dans la paroi antérieure (11) de la section de poche (1) englobant les parties de paroi (11a,11b) se recouvrant et on dispose la bande longitudinale (17) détachable dans la partie externe de paroi antérieure (11a).

14. Toilette sèche selon la revendication 13, caractérisée en ce qu'on implante la bande longitudinale détachable près du cordon longitudinal (2) parallèlement à lui.

15. Toilette sèche selon l'une des revendications 11 à 14, caractérisée en ce qu'on forme la paroi antérieure (11) de la section de poche (1) de pièces de recouvrement de même largeur (11a,11b) du matériau de poche.

16. Toilette sèche selon l'une des revendications 3 à 15, caractérisée en ce que la longueur de la couche intermédiaire (5) mesurée entre les cordons de liaison latéraux (10) correspond approximativement à la largeur de la section de poche (1).

17. Toilette sèche selon l'une des revendications 1 à 16, caractérisée en ce que la section de poche (1) comprend le long de ses bords latéraux un pli latéral (19) incorporé.

FIG.1

FIG.2

FIG.3

FIG.4

FIG.5

FIG.6

FIG. 7

FIG. 8

FIG. 9

FIG.10

FIG.11

FIG.12

FIG.13

FIG.14

FIG.15